# FASCICULE DE BREVET EUROPEEN

(11) **EP 1 817 178 B1**
(45) Date de publication et mention de la délivrance du brevet: **21.01.2009**
(21) Numéro de dépôt: 05811121.2
(22) Date de dépôt: 22.11.2005
(51) Int. Cl.: B60C 11/13, B60C 11/04

(54) **PROFIL TRANSVERSAL DE RAINURE DE BANDE DE ROULEMENT.**
QUERPROFIL FÜR EINE GEWINDERILLE
TRANSVERSAL PROFILE FOR A TREAD GROOVE

(30) Priorité: 24.11.2004 FR 0412542
(43) Date de publication de la demande: 15.08.2007
(73) Titulaire: Société de Technologie Michelin, 63000 Clermont-Ferrand (FR); Michelin Recherche et Technique S.A., 1763 Granges-Paccot (CH)
(72) Inventeur: DURAND, Alain, F-63210 Aurieres (FR)
(74) Mandataire: Diernaz, Christian
(86) Numéro de dépôt international: PCT/EP2005/056143
(87) Numéro de publication internationale: WO 2006/056571

(56) Documents cités:
- DE-A1- 3 619 149
- PATENT ABSTRACTS OF JAPAN vol. 2000, no. 22, 9 mars 2001 (2001-03-09) & JP 2001 121923 A (BRIDGESTONE CORP), 8 mai 2001 (2001-05-08)

## Description

L'invention concerne les sculptures des bandes de roulement de pneumatiques et plus particulièrement les sculptures des pneumatiques portant de lourdes charges comme par exemple des pneumatiques pour véhicules poids lourd ou de génie civil ou de manutention, ou pour engins agricoles.

Il est usuel de pourvoir un pneumatique avec une bande de roulement elle même pourvue d'une sculpture formée d'une pluralité de motifs en relief délimités par des rainures d'orientation moyenne transversale et/ou longitudinale (par direction longitudinale d'une bande, on entend ici la direction circonférentielle lorsque cette bande équipe un pneumatique).

Un pneumatique pour véhicule portant de très lourdes charges est soumis, entre autres, à des efforts de compression dans la région de contact entre la bande de roulement dudit pneumatique et le sol (ou la chaussée). Ces efforts de compression sont localement amplifiés compte tenu de la présence de rainures. On constate de fortes contraintes localisées en certains points des parois délimitant lesdites rainures. Combinées éventuellement avec des efforts s'exerçant tangentiellement à la surface de contact du pneumatique avec le sol, ces contraintes localisées peuvent conduire à une fragilisation des parois des rainures. Il peut notamment en résulter l'apparition de fissures prenant naissance sur lesdites parois, ces fissures se propageant ensuite vers l'intérieur de la bande de roulement.

Ce problème est connu et il a déjà été proposé de le traiter en adoptant un profil transversal particulier pour les rainures de la bande de roulement. Par exemple, le brevet US 2756797 décrit et propose un pneumatique ayant des rainures dont le profil transversal est formé de trois parties reliées entre elles. La figure 1 montre un profil de rainure telle décrit dans ce brevet. Une rainure 1 présente un profil comprenant une première partie (AB) sensiblement rectiligne reliant un point A sur la surface de roulement à un point B situé aux deux tiers de la profondeur de la rainure ; une deuxième partie (BC) en forme d'arc de cercle relie la première partie à une troisième partie (CD) plane formant le fond de la rainure. Cette troisième partie se prolonge ensuite par une partie DE) symétrique de la partie (BC), elle même prolongée par une cinquième et dernière partie (EF) symétrique de la première partie (AB). Le point F terminant cette cinquième partie est situé sur la surface de roulement. Le raccordement entre les première et deuxième parties et le raccordement entre les quatrième et cinquième parties se font de manière tangente.
DE 36 19 149 A1 est un autre document qui montre les caractéristiques du préambule de la revendication 1.

Si une amélioration a peut être pu être constatée pour des pneumatiques réalisés selon l'enseignement de ce document, on constate aujourd'hui que cette solution n'est pas entièrement satisfaisante pour certaines catégories de pneumatiques développés pour des usages spécifiques. C'est notamment le cas pour des pneumatiques portant de très lourdes charges (comme ceux équipant des engins de travaux de génie civil ou ceux équipant des véhicules de type poids lourd ou de manutention), pour lesquels les conditions de roulage ont fortement évoluées tant en ce qui concerne les charges supportées qu'en ce qui concerne les vitesses de roulage.

La présente invention est relative à une solution permettant d'éviter l'apparition prématurée, voire même en cours d'usage, de fissures sur les parois des rainures d'une bande de roulement d'un pneumatique pour véhicule fortement sollicité en charge et/ou en vitesse de roulage.

La bande de roulement selon l'invention comprend une surface de roulement destinée à venir en contact avec le sol, une pluralité de rainures débouchant sur la surface de roulement, chaque rainure ayant une orientation moyenne et étant délimitée par des parois en vis-à-vis, ces parois se raccordant par un fond de rainure, chaque rainure étant définie géométriquement par un profil transversal obtenu en coupant ladite rainure par un plan de coupe sensiblement transversal à une direction moyenne de la rainure, cette bande de roulement étant caractérisée en ce que le profil transversal d'une pluralité de rainures présente des courbures dont la variation dans le plan de coupe est mathématiquement continue ou, autrement dit, en ce que la variation de courbure en tout point dudit profil, peut être représentée comme une fonction mathématique continue de la position (ou abscisse curviligne) sur ledit profil transversal.

Par direction moyenne d'une rainure, on entend ici la direction moyenne sur la surface de roulement de la rainure obtenue comme la moyenne des directions des traces sur cette surface de roulement des parois délimitant ladite rainure. Par direction transversale, on entend une direction différente de la direction moyenne d'une rainure et en règle générale cette direction est prise perpendiculairement à cette direction moyenne.

Il a été constaté qu'un profil transversal de rainure à courbure variable d'un point d'extrémité sur la surface de roulement à un autre point d'extrémité sur la même surface de roulement, combiné à une variation continue de cette courbure permettait de résoudre le problème rappelé plus haut. Par variation continue, on entend qu'entre deux points d'un profil de rainure, il n'y a pas de discontinuité des valeurs prises par lesdites courbures. Même sous des efforts de compression très supérieurs à ceux qui sont imposés en usage, il est possible d'éviter l'apparition de points de discontinuité sur le profil transversal d'une rainure selon l'invention, ce qui distingue ladite invention de l'état de la technique connu.

Dans une première variante de l'invention, le profil transversal d'au moins une rainure peut être représenté par une fonction mathématique du type polynôme de degré supérieur ou égal à 2, ou par une fonction mathématique du type paramétrique polynomiale.

Dans une deuxième variante de l'invention, le profil transversal d'au moins une rainure peut être représenté par une fonction mathématique du type conique (on entend ici par conique, une courbe obtenue par l'intersection d'un plan et d' un cône).

Dans une troisième variante de l'invention, le profil transversal d'au moins une rainure présente une variation de courbure qui est une fonction linéaire de la position du point considérée sur ledit profil, pour former une portion de clothoïde.

Dans une quatrième variante, le profil transversal d'au moins une rainure peut être formé par une portion de clothoïde "étirée". On entend, ici, par clothoïde "étirée" une courbe issue d'une clothoïde à laquelle on applique une affinité selon un de ses axes principaux.

Dans une cinquième variante, le profil transversal d'au moins une rainure peut être représenté par une fonction mathématique de type spline à courbure continue.

L'invention couvre également les profils approchant suffisamment lesdits profils où la continuité des courbures ne peut être, à partir d'une certaine échelle, qu'approchée pour des raisons liées notamment aux possibilités actuelles d'usinage des moules pour le moulage des rainures.

Dans une cinquième variante de l'invention, le profil transversal d'au moins une rainure présente entre deux points quelconques consécutifs pris sur ledit profil une même variation de courbure pour former une portion de spirale.

L'invention concerne également un pneumatique pourvu d'une bande de roulement telle que définie précédemment.

D'autres caractéristiques et avantages de l'invention ressortent de la description faite ci-après en référence au dessin annexé qui montre, à titre d'exemples non limitatifs, des formes de réalisation de l'objet de l'invention.

La figure 1 montre une forme de rainure selon l'art antérieur

La figure 2 montre les variations de courbure relevée sur le profil de la rainure de la figure 1 ;

La figure 3 montre un profil transversal d'une rainure selon l'invention;

La figure 4 montre les variations de courbure relevée sur le profil de la rainure de la figure 3 ;

La figure 5 montre les variations de courbure d'une variante de réalisation d'une géométrie de rainure proche celle montrée avec la figure 3 ;

La figure 6 montre une deuxième courbe de variation des courbures d'une variante de rainure selon l'invention.

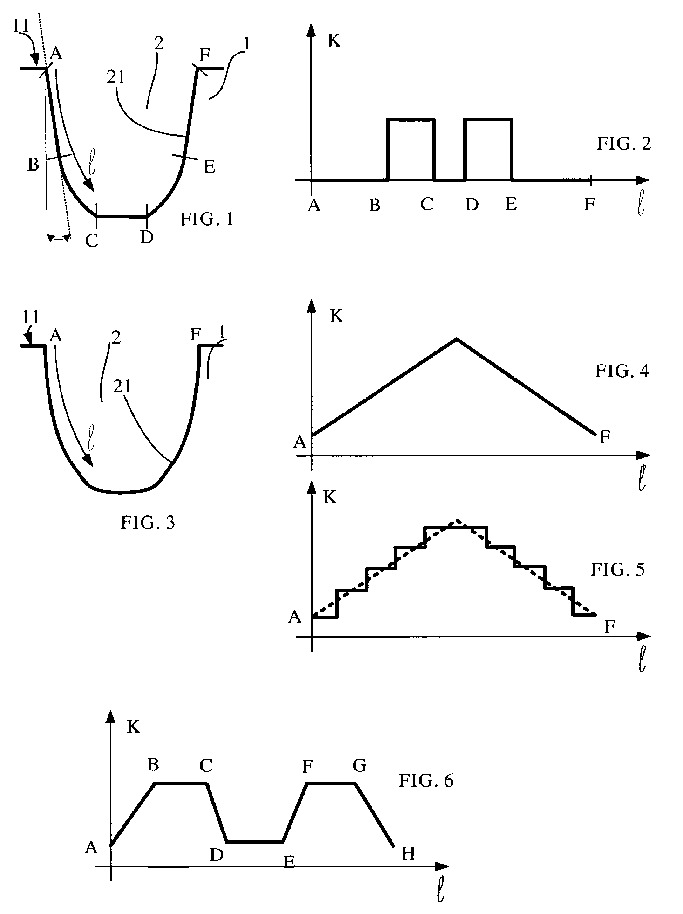

La figure 1 montre une forme de rainure 1 d'une bande de roulement 1 de l'état de la technique selon le brevet US 2756797. Selon ce document, une rainure 1 présente un profil transversal 21 comprenant une première partie (AB) sensiblement rectiligne reliant un point A sur la surface de roulement 11 à un point B situé aux deux tiers de la profondeur de la rainure ; une deuxième partie (BC) en forme d'arc de cercle relie la première partie à une troisième partie (CD) plane formant le fond de la rainure. Cette troisième partie se prolonge ensuite par une partie DE) symétrique de la partie (BC), elle même prolongée par une cinquième et dernière partie (EF) symétrique de la première partie (AB). Le point F terminant cette cinquième partie est situé sur la surface de roulement.

Si on se reporte à la figure 2 montrant en chaque point du profil 21 la valeur locale de la courbure dans le plan de coupe en fonction de l'abscisse curviligne 1 prise le long du profil transversal de rainure entre les points A et F, intersections dudit profil 21 avec la surface de roulement 11 (l'origine desdites abscisses étant prise au point A sur la surface de roulement), on observe que les courbures ne sont pas continues entre les points d'intersection dudit profil avec la surface de roulement. En particulier, au point B on trouve deux valeurs de courbure : selon que l'on se place sur le segment de droite AB, la courbure est nulle ou sur l'arc BC, la courbure est non nulle. Cette discontinuité des courbures, selon un constat effectué par les Déposantes, serait à l'origine de l'apparition de points sensibles à la micro fissuration lorsque la bande de roulement est fortement sollicitée.

Si on examine la figure 2 montrant en chaque point la valeur locale de la courbure (notée "K") en fonction de l'abscisse curviligne 1 prise le long du profil transversal de rainure, on observe que les courbures sont soit nulles (sur les parties rectilignes) soit constantes (sur les parties d'arc de cercle) et qu'aux points de raccordement (c'est-à-dire en B, C, D, E) il y a discontinuité desdites courbures bien que les tangentes auxdits points soient identiques. Il a été observé qu'en ces points de discontinuité il pouvait se produire des concentrations de déformations et de contraintes cause probable d'apparition de micro fissures.

La figure 3 montre un profil transversal d'une rainure 2 selon l'invention. Par commodité, les références de la figure 1 sont employées pour désigner les mêmes éléments. Ce profil est représenté ici de façon schématique selon un plan de coupe sensiblement perpendiculaire à la direction longitudinale de la rainure. Selon l'invention, le profil 21 à l'état neuf d'une rainure 2 d'une bande de roulement 1 s'étend entre un point A et un point F, tous deux sur la surface de roulement 11 et est décrit par une courbe dont l'expression mathématique présente, du point de vue des courbures, l'allure montrée à la figure 4.

Sur cette figure 4, l'axe des abscisses (noté "1") représente les coordonnées linéaires prises le long du profil 21 de la rainure 2, l'origine desdites coordonnées étant prise au point A sur la surface de roulement. La forme géométrique représentant la variation des courbures K en chacun des points du profil transversal comprend une première partie à variation linéaire croissante entre le point A et un point O suivie de façon continue par une partie à variation linéaire décroissante entre le point O et le point F. le point O correspond au point du profil situé le plus à l'intérieur de la bande de roulement.

La rainure 2 de la figure 3 a un profil transversal ayant une forme correspondant à une portion d'une courbe mathématique dite "clothoïde". Les coordonnées des points qui constituent cette portion ne peuvent être déterminées algébriquement ; seules la pente et la courbure sont aisément calculables.

Comme variante, non représentée, il est également proposé de modifier par une transformation mathématique de type "affinité" une forme géométrique initiale de clothoïde pour obtenir une clothoïde plus ou moins "étirée" selon le besoin. La forme finale ainsi obtenue présente la caractéristique essentielle de l'invention, à savoir qu'il n'y a pas de discontinuité des courbures le long du profil transversal de la rainure.

Dans la pratique, il peut être aujourd'hui difficile de réaliser un profil de rainure dont les courbures suivent la forme montrée à la figure 4 ; c'est la raison pour laquelle, on considère qu'une réalisation telle que montrée à la figure 5, tout en présentant de petites discontinuités des courbures, n'en est pas moins équivalente sur le plan du résultat atteint. Sur cette figure 5, les courbures voulues K (en traits pointillés) sont approchées par une série de courbures successives séparées entre elles par de petites discontinuités (en traits continus). Par petites discontinuités, on entend ici des écarts de courbure inférieurs à ceux usuellement constatés entre une partie de profil rectiligne (c'est-à-dire de courbure nulle) et une partie courbe.

Dans un autre exemple, montré à la figure 6, les variations de la courbure K suivent une forme alternativement linéaire croissante (parties AB et EF) et décroissante (parties CD et GH) en alternance avec des parties de courbures constantes (parties BC, DE, FG). Dans cet exemple, il n'existe qu'une seule valeur de courbure K en chaque point du profil transversal (à l'exception toutefois, des points A et F qui sont également sur la surface de roulement).

L'invention, qui vient d'être décrite à l'aide des exemples donnés à titre non limitatif, n'est bien sûr pas limitée à ces seuls exemples ; diverses modifications peuvent y être apportées par la personne du métier sans sortir du cadre des revendications suivantes.

## Revendications

1. Bande de roulement (1) pour pneumatique comprenant une pluralité de rainures (2) débouchant sur une surface de roulement (11), chaque rainure ayant une orientation moyenne et étant délimitée par des parois en vis-à-vis, ces parois se raccordant par un fond de rainure, chaque rainure étant définie géométriquement par un profil transversal obtenu en coupant ladite rainure par un plan de coupe sensiblement transversal à la direction moyenne de la rainure, cette bande de roulement étant **caractérisée en ce que** le profil transversal (21) d'une pluralité de rainures (2) présente des courbures variables (K), la variation desdites courbures dans le plan de coupe étant mathématiquement continue.

2. Bande de roulement selon la revendication 1 **caractérisée en ce que** la variation de courbure en tout point du profil transversal (21) d'une pluralité de rainures (2) peut être représentée comme une fonction mathématique continue voire quasi continue de la position sur ledit profil transversal.

3. Bande de roulement selon la revendication 1 ou selon la revendication 2 **caractérisée en ce que** le profil transversal d'au moins une rainure peut être représenté par une fonction mathématique du type paramétrique polynomiale.

4. Bande de roulement selon la revendication 1 ou selon la revendication 2 **caractérisée en ce que** le profil transversal d'au moins une rainure peut être représenté par une fonction mathématique du type spline à courbure continue.

5. Bande de roulement selon la revendication 1 ou selon la revendication 2 **caractérisée en ce que** le profil transversal d'au moins une rainure peut être représenté par une fonction mathématique du type polynôme de degré supérieur ou égal à 2.

6. Bande de roulement selon la revendication 1 ou selon la revendication 2 **caractérisée en ce que** le profil transversal d'au moins une rainure présente entre des points quelconques consécutifs pris sur ledit profil une même variation de courbure pour former une portion de spirale.

7. Bande de roulement selon la revendication 1 ou selon la revendication 2 **caractérisée en ce que** le profil transversal d'au moins une rainure présente, entre deux points quelconques consécutifs pris sur ledit profil, une variation de courbure continue pour former une portion de conique.

8. Bande de roulement selon la revendication 1 ou selon la revendication 2 **caractérisée en ce que** le profil transversal d'au moins une rainure présente des courbures qui peuvent être représentées par une fonction mathématique linéaire de la position du point considéré sur ledit profil, pour former une portion de clothoïde.

9. Bande de roulement selon la revendication 1 ou selon la revendication 2 **caractérisée en ce que** le profil transversal d'au moins une rainure présente une variation de courbure qui est une fonction linéaire de la position du point considérée sur ledit profil, pour former une portion de composée de clothoïde et d'une affinité.

10. Pneumatique pourvu d'une bande de roulement selon l'une quelconque des revendications 1 à 9.

## Claims

1. A tyre tread (1) comprising a plurality of grooves (2) opening on to a running surface (11), each groove having an average orientation and being defined by facing walls, these walls being connected together by a groove bottom, each groove being defined geometrically by a transverse profile obtained by intersecting said groove by a section plane substantially transverse to the average direction of the groove, this tread being **characterised in that** the transverse profile (21) of a plurality of grooves (2) has variable curvatures (K), the variation of said curvatures in the section plane being mathematically continuous.

2. A tread according to Claim 1, **characterised in that** the variation in curvature at any point of the transverse profile (21) of a plurality of grooves (2) may be represented as a continuous or even virtually continuous mathematical function of the position on said transverse profile.

3. A tread according to Claim 1 or according to Claim 2, **characterised in that** the transverse profile of at least one groove may be represented by a mathematical function of the parametric polynomial type.

4. A tread according to Claim 1 or according to Claim 2, **characterised in that** the transverse profile of at least one groove may be represented by a mathematical function of the continuous spline curve type.

5. A tread according to Claim 1 or according to Claim 2, **characterised in that** the transverse profile of at least one groove may be represented by a mathematical function of the polynomial type of a degree greater than or equal to 2.

6. A tread according to Claim 1 or according to Claim 2, **characterised in that** the transverse profile of at least one groove has, between any consecutive points taken on said profile, the same variation in curvature to form a portion of a spiral.

7. A tread according to Claim 1 or according to Claim 2, **characterised in that** the transverse profile of at least one groove has, between any two consecutive points taken on said profile, a continuous variation in curvature to form a conical portion.

8. A tread according to Claim 1 or according to Claim 2, **characterised in that** the transverse profile of at least one groove has curvatures which may be represented by a linear mathematical function of the position of the point in question on said profile, to form a portion of a clothoid.

9. A tread according to Claim 1 or according to Claim 2, **characterised in that** the transverse profile of at least one groove has a variation in curvature which is a linear function of the position of the point in question on said profile, to form a portion composed of a clothoid and an affinity.

10. A tyre provided with a tread according to any one of Claims 1 to 9.

## Patentansprüche

1. Laufstreifen (1) für einen Luftreifen, der mehrere Rillen (2) aufweist, die an einer Lauffläche (11) münden, wobei jede Rille eine mittlere Ausrichtung hat und von einander gegenüber liegenden Wänden begrenzt wird, wobei diese Wände durch einen Rillenboden vereint werden, wobei jede Rille geometrisch von einem Querprofil definiert wird, das durch Schneiden der Rille in einer Schnittebene im Wesentlichen quer zur mittleren Richtung der Rille erhalten wird, wobei dieser Laufstreifen **dadurch gekennzeichnet ist, dass** das Querprofil (21) mehrerer Rillen (2) variable Krümmungen (K) aufweist, wobei die Änderung der Krümmungen in der Schnittebene mathematisch stetig ist.

2. Laufstreifen nach Anspruch 1, **dadurch gekennzeichnet, dass** die Krümmungsänderung an jedem Punkt des Querprofils (21) mehrerer Rillen (2) als eine stetige, sogar praktisch stetige mathematische Funktion der Position auf dem Querprofil dargestellt werden kann.

3. Laufstreifen nach Anspruch 1 oder nach Anspruch 2, **dadurch gekennzeichnet, dass** das Querprofil mindestens einer Rille durch eine mathematische Funktion vom parametrischen polynomischen Typ dargestellt werden kann.

4. Laufstreifen nach Anspruch 1 oder nach Anspruch 2, **dadurch gekennzeichnet, dass** das Querprofil mindestens einer Rille durch eine mathematische Funktion vom Typ Spline mit stetiger Krümmung dargestellt werden kann.

5. Laufstreifen nach Anspruch 1 oder nach Anspruch 2, **dadurch gekennzeichnet, dass** das Querprofil mindestens einer Rille durch eine mathematische Funktion vom Typ Polynom eines Grads größer als oder gleich 2 dargestellt werden kann.

6. Laufstreifen nach Anspruch 1 oder nach Anspruch 2, **dadurch gekennzeichnet, dass** das Querprofil mindestens einer Rille zwischen beliebigen aufeinander folgenden Punkten auf dem Profil die gleiche Krümmungsänderung aufweist, um einen Spiralabschnitt zu formen.

7. Laufstreifen nach Anspruch 1 oder nach Anspruch 2, **dadurch gekennzeichnet, dass** das Querprofil mindestens einer Rille zwischen zwei beliebigen aufeinander folgenden Punkten auf dem Profil eine stetige Krümmungsänderung aufweist, um einen Kegelabschnitt zu formen.

8. Laufstreifen nach Anspruch 1 oder nach Anspruch 2, **dadurch gekennzeichnet, dass** das Querprofil mindestens einer Rille Krümmungen aufweist, die durch eine lineare mathematische Funktion der Position des betrachteten Punkts auf dem Profil dargestellt werden können, um einen Klothoidenabschnitt zur formen.

9. Laufstreifen nach Anspruch 1 oder nach Anspruch 2, **dadurch gekennzeichnet, dass** das Querprofil mindestens einer Rille eine Krümmungsänderung aufweist, die eine lineare Funktion der Position des betrachteten Punkts auf dem Profil ist, um einen zusammengesetzten Abschnitt aus einer Klothoide und einer Affinität zu formen.

10. Luftreifen, der mit einem Laufstreifen nach einem der Ansprüche 1 bis 9 versehen ist.
